## Europäisches Patentamt
## European Patent Office
## Office européen des brevets

(19)

(11) Veröffentlichungsnummer: **0 046 560**
**B1**

(12) **EUROPÄISCHE PATENTSCHRIFT**

(45) Veröffentlichungstag der Patentschrift:
04.01.84

(51) Int. Cl.³: **A 22 C 11/02**

(21) Anmeldenummer: **81106378.3**

(22) Anmeldetag: **17.08.81**

(54) **Zum Entfälteln und Glätten einer gerafften Schlauchhülle geeignete Vorrichtung sowie diese Vorrichtung enthaltende Anordnung und funktionelle Einheit mit dieser Vorrichtung.**

(30) Priorität: **25.08.80 US 180997**

(43) Veröffentlichungstag der Anmeldung:
**03.03.82 Patentblatt 82/9**

(45) Bekanntmachung des Hinweises auf die Patenterteilung:
**04.01.84 Patentblatt 84/1**

(84) Benannte Vertragsstaaten:
**AT BE CH DE FR GB IT LI LU NL SE**

(56) Entgegenhaltungen:
**EP - A - 0 004 013**
**EP - A - 0 021 189**
**DE - B - 1 177 029**
**FR - A - 2 056 204**
**FR - A - 2 332 908**
**FR - A - 2 350 790**
**US - A - 1 518 511**
**US - A - 3 457 588**
**US - A - 3 949 446**
**US - A - 4 007 761**
**US - A - 4 017 941**
**US - A - 4 164 057**

(73) Patentinhaber: **HOECHST AKTIENGESELLSCHAFT,
Postfach 80 03 20, D-6230 Frankfurt am Main 80 (DE)**

(72) Erfinder: **Becker, Reinhold, Dr., Am Hohen Stein 18,
D-6200 Wiesbaden (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Zum Entfälteln und Glätten einer gerafften Schlauchhülle geeignete Vorrichtung sowie diese Vorrichtung enthaltende Anordnung und funktionelle Einheit mit dieser Vorrichtung

Die Erfindung bezieht sich auf eine Vorrichtung von der im Oberbegriff des Anspruchs 1 genannten Art, eine diese Vorrichtung enthaltende Anordnung sowie eine funktionelle Einheit mit dieser Vorrichtung.

Zur Verpackung von Nahrungsmitteln, z.B. Fleischwaren in Form von Wurstmasse, werden bekanntlich geraffte, schlauchförmige Hüllen aus synthetischem, halbsynthetischem oder natürlichem Material verwendet. Diese Hüllen, in der Fachsprache auch als Raupen oder Hohlstäbe bezeichnet, werden aus langen Hüllen durch Fälteln und längsaxiales Stauchen hergestellt, wobei die Länge der gerafften Hülle gewöhnlich nur noch 1 bis 3% der Ursprungslänge beträgt. Im allgemeinen wird zum Abfüllen der Wurstmasse zunächst eine einseitig verschlossene, geraffte schlauchförmige Hülle über das Füllrohr einer Wurstabfüllmaschine geschoben. Die Wurstmasse wird dann unter Druck durch das Füllrohr in die Hülle gepresst, welche dadurch fortlaufend entfältelt wird. Nach Erreichen einer bestimmten Länge werden zylinderförmige Würste abgebunden und verschlossen.

Der Durchmesser der erhaltenen Würste sollte aus verschiedenen Gründen über die gesamte Länge konstant bleiben. Nur ein gleichmässiger Durchmesser, dessen Grösse z.B. vom Hüllenmaterial abhängig ist, gewährleistet einen optimalen Abfüllvorgang. Auch besteht bei Überfüllung die Gefahr des Aufplatzens der Wursthülle, während die Wursthülle bei zu geringer Füllung eine faltige Oberfläche zeigt.

Es wurde bereits verschiedene Vorrichtungen zum Abfüllen von Wurstmasse in geraffte, schlauchförmige Hüllen vorgeschlagen, bei denen spezielle Einrichtungen einen möglichst gleichmässigen Durchmesser der abgefüllten Packung erzielen sollen.

So ist es üblich, an der Öffnung des Füllrohres der Abfüllmaschine eine Kalibriervorrichtung anzubringen, welche mit ihrer Oberfläche auf die Innenwand der zu füllenden Hülle angepresst wird und diese aufweitet. Durch diesen Anpressdruck treten zwischen der Kalibriervorrichtung und der Innenwand der Hülle Reibungskräfte auf, welche den Abzug der Hülle bremsen (US-A Nr. 3457588). Als Kalibriervorrichtung werden beispielsweise am Öffnungsrand des Füllrohres angebrachte federnde Finger beschrieben (US-A Nr. 3264679), die durch Einschlitzen der Füllrohröffnung gebildet sind. Sie drücken auf die Innenwand der Hülle und weiten sie auf. Es bildet sich ein Reibungswiderstand, wenn die Hülle während des Füllens über diese Finger gezogen wird. Diese Vorrichtung zeigt jedoch den Nachteil, dass der Reibungswiderstand während des Füllvorgangs sehr hoch ist und Abrisse auftreten können. Ferner besteht die Gefahr, dass die Hülle an den aufspreizenden Fingern verletzt wird. Ausserdem handelt es sich bei dieser Vorrichtung nicht um eine selbstständige funktionelle Einheit aus Kalibrierteil und Schlauchhülle.

Es wurde auch schon beschrieben, die geraffte, schlauchförmige Hülle zusammen mit einer Kalibrierscheibe zu verpacken und diese Anordnung vor dem Füllvorgang mit dem Füllrohr zu verbinden (US-A Nr. 4007761). Die Kalibrierscheibe wird von einem ungerafften Teil eingeschlossen, wobei allerdings der Aussenumfang der Kalibrierscheibe grösser sein soll als der Innenumfang der ungerafften Hülle. Beim Füllvorgang wird die Hülle über die Kalibrierscheibe gezogen und somit gedehnt und aufgeweitet. Die Kalibrierscheibe muss aus starrem unelastischem Material bestehen, so dass ihr Durchmesser durch die Andruckkraft der Hülle gegen den Umfang der Kalibrierscheibe nicht verändert werden kann.

Diese unelastische Kalibrierscheibe zeigt somit den Nachteil, dass bei fertigungstechnisch nicht zu vermeidenden Schwankungen des Hüllenumfangs keine optimale Füllung der Hülle erreicht wird. Bei zu kleinem Kaliber der Hülle besteht ausserdem die Gefahr, dass sie durch die Kalibrierscheibe beschädigt wird oder abreisst; zumindest tritt eine besonders starke Reibung zwischen Hülle und Kalibrierscheibe auf, so dass die Hülle mit Wurstmasse überfüllt und beim Brühen dem auftretenden hohen Druck nicht standhält und platzt.

Ferner ist eine Kalibriervorrichtung bekannt (EP-A-Nr. 0004013), die aus einem flexiblen Material besteht und deren Durchmesser variierbar ist. Auch mit dieser Vorrichtung soll die Schlauchhülle vor dem Befüllen mit Wurstmasse gedehnt und aufgeweitet werden, wobei diese Vorrichtung eine steuerbare Aufweitung gestattet. Allerdings können auch in diesem Fall starke Reibungskräfte zwischen der Schlauchhülle und dem Kalibrierteil auftreten.

Ausgehend von diesem Stand der Technik besteht die Aufgabe der vorliegenden Erfindung darin, eine Vorrichtung zu schaffen, die zum entfälteln und Glätten einer gerafften Schlauchhülle vor dem Einlauf in den Bremsteil einer Stopfvorrichtung geeignet ist, wobei die Schlauchhülle problemlos vom gerafften in einen einwandfreien faltenfreien Zustand übergeführt werden kann, ohne dass Gefahr besteht, dass die Schlauchhülle bei diesem Vorgang beschädigt wird. Ferner soll die Vorrichtung einen definierten, ruckfreien Einzug in den Bremsteil ermöglichen, wobei die Gefahr von Abrissen der Schlauchhülle verringert ist.

Überraschenderweise wird diese Aufgabe gelöst durch die Vorrichtung mit den im Anspruch 1, mit der Anordnung mit den im Anspruch 4, und mit der funktionellen Einheit mit den im Anspruch 7 aufgezeigten Merkmalen.

Unter einer glatten Mantelfläche wird im Rahmen der Erfindung eine Fläche verstanden, die keine makroskopischen Erhebungen, z.B. in Form einer Wellung, enthält.

Derartige Vorrichtungen und Anordnungen sind in ihrem prinzipiellen Aufbau bereits bekannt (US-A Nrn. 4077090, 4017941).

Im Gegensatz zu diesen bekannten Vorrichtungen ist jedoch der maximale Durchmesser des ringförmigen Hohlkörpers kleiner als der innere Durchmesser der entrafften Schlauchhülle im ungefüllten Zustand, was insofern nicht vorhersehbar war, da man bisher die Auffassung vertrat, dass eine Spreizung und Aufweitung der Schlauchhülle stets erforderlich ist. Wie nun überraschenderweise gefunden wurde, ist diese Aufweitung zum einwandfreien Befüllen der Schlauchhülle nicht erforderlich, sondern nur von Nachteil. Es ist vollkommen ausreichend, wenn die Schlauchhülle zum Entfälteln und Glätten über die Aussenseite des ringförmigen Hohlkörpers gezogen wird, ohne dass eine Aufweitung der Schlauchhülle über ihren ursprünglichen Durchmesser hinaus erforderlich ist. Vorzugsweise ist der maximale Durchmesser des ringförmigen Hohlkörpers 70 bis 99, insbesondere 90 bis 99%, des Innendurchmessers der Schlauchhülle im ungerafften Zustand.

Die schlauchförmige Hülle besteht beispielsweise aus einem der üblichen zur Herstellung von Würsten verwendeten Materialien, wie Cellulosehydrat, Kollagen oder Kunstdarm, und ist gegebenenfalls faserverstärkt. Sie zeigt auf ihrer äusseren und/oder inneren Oberfläche übliche Beschichtungen, z.B. aus einem wasserdampf- und sauerstoffundurchlässigen Material. Bei Verwendung einer Hülle aus Cellulosehydrat kann diese einen üblichen Wassergehalt besitzen, z.B. bis zu etwa 35%, so dass sie vor dem Befüllen nicht gewässert werden muss.

Der wesentliche erfindungsgemässe Vorrichtungsteil ist der ringförmige Hohlkörper, welcher die schlauchförmige Hülle vor dem Befüllen mit Wurstmasse entrafft und glättet. Er besteht aus einem kreisförmigen Ring mit einer zentralen Öffnung zum Aufschieben und Fixieren auf das Füllrohr einer Stopfvorrichtung, wie sie z.B. zum Abfüllen von Wurstmasse in schlauchförmige Hüllen üblich ist. Die Befestigung des Hohlkörpers am Füllrohr erfolgt z.B. mit einem Gewinde oder Bajonettverschluss, vorzugsweise über einen Schnappverschluss in Form von elastischen Stegen oder eines Sicherungsringes nach DIN 471/472 neben der zentralen Öffnung des Hohlkörpers, die in eine Nut des Füllrohres einrasten. Der Hohlkörper ist relativ unelastisch und starr und besteht gewöhnlich aus Metall oder Kunststoff wie Polypropylen oder Polyäthylen. Bei Verwendung von Kunststoff mit einem E-Modul von $10^3$-$10^4$ N/mm² ist z.B. eine Dicke von 2 bis 6 mm ausreichend, um einen ausreichend starren Hohlkörper zu erhalten. Die elastisch federnden Stege müssen dann eine relativ geringe Dicke von etwa 2 bis 3 mm besitzen.

Die Aussenoberfläche des ringförmigen Hohlkörpers hat vorzugsweise die Form einer sich konisch erweiternden Ringfläche, die sich in Gegenrichtung zur gerafften Hülle erweitert. Die Schlauchhülle ist mit einem entfältelten Teil über diese Ringfläche gezogen.

Diese Vorrichtung bzw. Anordnung gewährleistet, dass die Schlauchhülle vor dem eigentlichen Füllen und während des Entfältelns einen Innendurchmesser erhält, der 70 bis 99, insbesondere 90 bis 99% des Wertes beträgt, den der Innendurchmesser der schlauchförmigen Hülle vor dem Raffen gezeigt hatte. Somit unterbleibt eine Dehnung oder Spreizung der Hülle und deren nachteilige Auswirkung auf den Füllvorgang.

Vor dem Befüllen wird der Anfang des entfältelten Teils der Schlauchhülle des Hohlkörpers durch eine ringförmige Bremse, die das Hüllenkaliber verengt und eine Stauch- und Bremskraft ausübt, dann durch eine Einrichtung zum Verschliessen bzw. Abbinden der Schlauchhülle, z.B. durch eine Clip-Vorrichtung, und durch eine Schneidestation gezogen.

Durch den Druck, mit dem das pastöse Füllgut, z.B. Wurstmasse, nun durch das Füllrohr in den entfältelten Teil der schlauchförmigen Hülle gepresst wird, gleitet die Hülle fortlaufend über die äussere Oberfläche des ringförmigen Hohlkörpers, wobei sie entfältelt und geglättet wird, ohne dass wesentliche Reibungskräfte durch die gegenseitige Berührung auftreten. Hierbei arbeitet man gewöhnlich mit einer Abzugsgeschwindigkeit von 10 bis 20 m/min. Die Länge der äusseren Oberfläche des ringförmigen Hohlkörpers ist vorteilhafterweise 2 bis 4 cm, so dass bei dieser Abzugsgeschwindigkeit die maximale Berührungsdauer zwischen äusserer Oberfläche des Hohlkörpers und innerer Oberfläche der Schlauchhülle gewöhnlich etwa ca. 0,2 s ist. Der geraffte Teil der Schlauchhülle wird durch den kreisförmigen Hohlkörper zurückgehalten. Somit ist auch gewährleistet, dass nur entfältelter und geglätteter Schlauch in die Bremseinheit gelangen kann und die Gefahr von Schlauchabrissen deutlich verringert wird.

Nachdem der Schlauch vollständig gefüllt ist, wird das Kalibrierteil vom Füllrohr entfernt und kann gegebenenfalls wiederverwendet werden.

Die funktionelle Einheit besteht aus einer gerafften schlauchförmigen Hülle, die auf ihrer Aussenseite mit einer Schutzumhüllung versehen ist. Die Schutzumhüllung besteht insbesondere aus wärmeverschweissbarem thermoplastischem Kunststoff, z.B. aus Polyamid, Polyvinylchlorid oder Polyolefin, der gegebenenfalls latentes durch Wärmeeinwirkung auslösbares Schrumpfvermögen aufweist. Sie bildet einen Stützbehälter für die in ihrem Hohlraum angeordnete geraffte Schlauchhülle.

In bevorzugter Ausführungsform sind an den Enden der gerafften Schlauchhülle Kreisringscheiben vorhanden, durch deren zentrale Ringöffnung sich die Schutzumhüllung erstreckt und um deren äussere Kreisringfläche in 180° in Richtung zur Mitte der Schlauchhülle die Schutzumhüllung umgeschlagen ist wie es in Fig. 4 der DE-A Nr. 2510637 gezeigt ist. Der umgeschlagene Teil der Schutzumhüllung ist vorteilhafterweise mit der äusseren Oberfläche des an die Schlauchhülle anliegenden Teils der Schutzumhüllung verschweisst.

Die Schutzumhüllung ist eine schlauchförmige Folie, insbesondere mit Durchbrechungen oder netzartiger oder gitterartiger Struktur.

Bei Schutzumhüllungen aus schrumpffähiger Folie ist die Schrumpfung im Bereich der Umschlingung um die Kreisringscheibe ausgelöst.

Der entraffte Teil der Schlauchhülle, der sich über die äussere Oberfläche des ringförmigen Hohlkörpers erstreckt, befindet sich ausserhalb der Schutzumhüllung, wobei die Kreisringscheiben dem ersten Ende des Hohlkörpers unmittelbar benachbart sind.

Zum Befüllen der funktionellen Einheit wird die geraffte Schlauchhülle mit ihrem offenen Ende das Füllrohr der Abfüllmaschine aufgeschoben und der Hohlkörper mit den an seinem inneren Umfang vorhandenen Verschlussteilen, z.B. mit den federnden stegartigen Elementen oder mit dem Sicherungsring nach DIN 471/472, auf der äusseren Oberfläche des Füllrohrs fixiert. Aus dem Füllrohr wird dann pastöse Masse, z.B. Wurstmasse in die Schlauchhülle gepresst, wobei die Schlauchhülle durch die zentrale Ringöffnung der Kreisringscheibe und anschliessend über die äussere Oberfläche des Hohlkörpers gleitet, wobei sie entrafft und geglättet wird. Der Durchmesser der zentralen Ringöffnung der Kreisringscheibe muss entsprechend gross gewählt werden; er ist vorteilhafterweise mindestens so gross wie der Innendurchmesser der gerafften Schlauchhülle.

Die Erfindung wird anhand der Fig. 1 bis 10 erläutert.

Fig. 1 zeigt den ringförmigen Hohlkörper in Frontansicht,

Fig. 2 zeigt den Hohlkörper in Seitenansicht im Schnitt entlang der Linie II-II der Fig. 1,

Fig. 3 zeigt den Hohlkörper in Seitenansicht im Schnitt entlang der Linie III-III der Fig. 1,

Fig. 3a zeigt eine modifizierte Form des ringförmigen Hohlkörpers der Fig. 1 bis 3 in Seitenansicht im Schnitt, vergleichbar mit Fig. 3,

Fig. 4 zeigt eine weitere Ausführungsform des ringförmigen Hohlkörpers mit einem Sicherungsring nach DIN 471/472 in Frontansicht,

Fig. 5 zeigt den Hohlkörper der Fig. 4 in Seitenansicht und im Schnitt entlang der Linie V-V der Fig. 4,

Fig. 6 zeigt den Hohlkörper der Fig. 1, aufgeschoben und fixiert auf ein Füllrohr in Frontansicht und im Schnitt entlang der Linie VI-VI in Fig. 8,

Fig. 7 zeigt in Frontansicht und im Schnitt den Hohlkörper der Fig. 1 auf einem Füllrohr beim Abnehmen vom Füllrohr,

Fig. 8 zeigt die Anordnung der Fig. 6 in Seitenansicht und im Schnitt entlang der Linie VIII-VIII in Fig. 6,

Fig. 9 zeigt eine Anordnung zum Befüllen einer gerafften, schlauchförmigen Hülle während des Füllvorgangs,

Fig. 10 zeigt eine funktionelle Einheit mit einer Vorrichtung zum Entfälteln und Glätten der Schlauchhülle in Seitenansicht, vorverpackt mit einer gerafften Schlauchhülle in einer Schutzhülle.

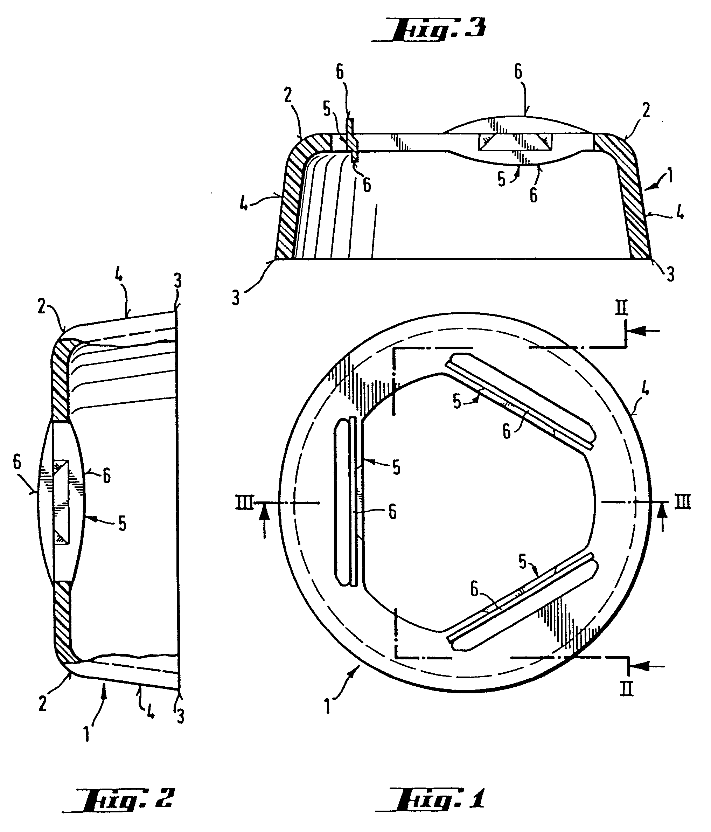

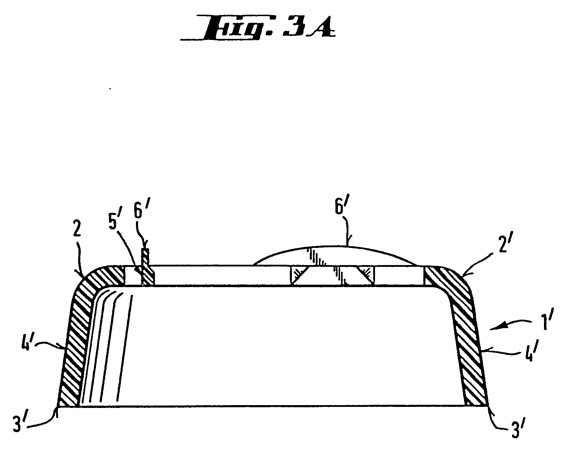

In den Fig. 1 bis 3 zeigt der ringförmige Hohlkörper 1 einen Aussendurchmesser, der sich — beginnend von einem ersten Ende 2 bis zu seinem zweiten Ende 3 — bis zu einem Maximalwert erweitert. Die äussere Oberfläche 4 bildet eine geschlossene Fläche. Der innere Umfang weist drei elastisch federnde stegartige Elemente 5 auf, die in beiden Richtungen parallel zur Längsachse einen gebogenen Verlauf ihres Umfangsrandes 6 zeigen.

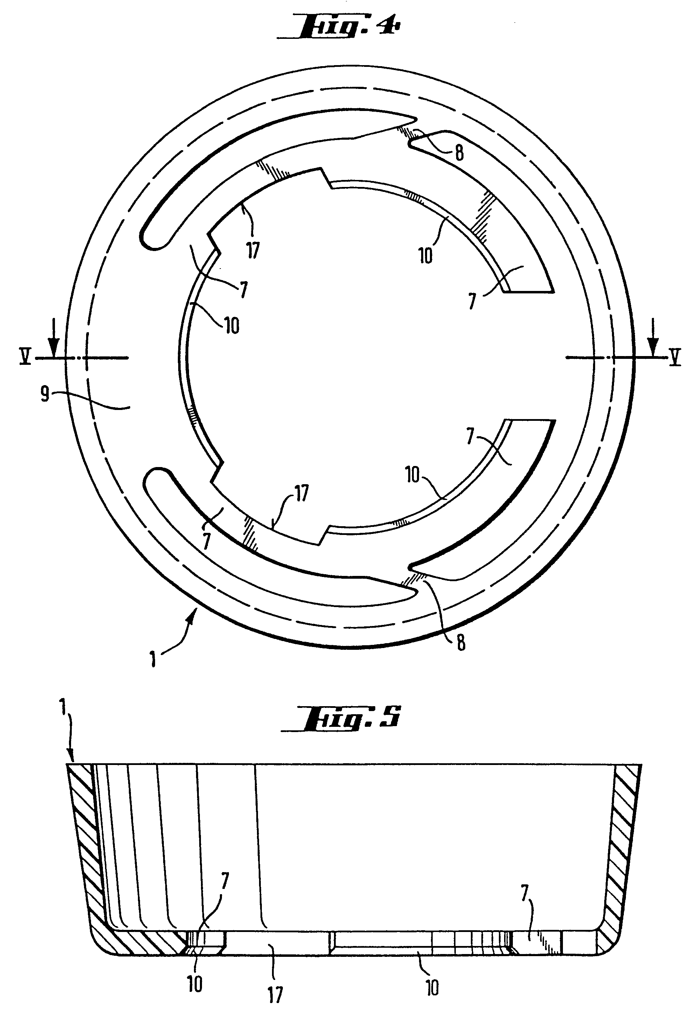

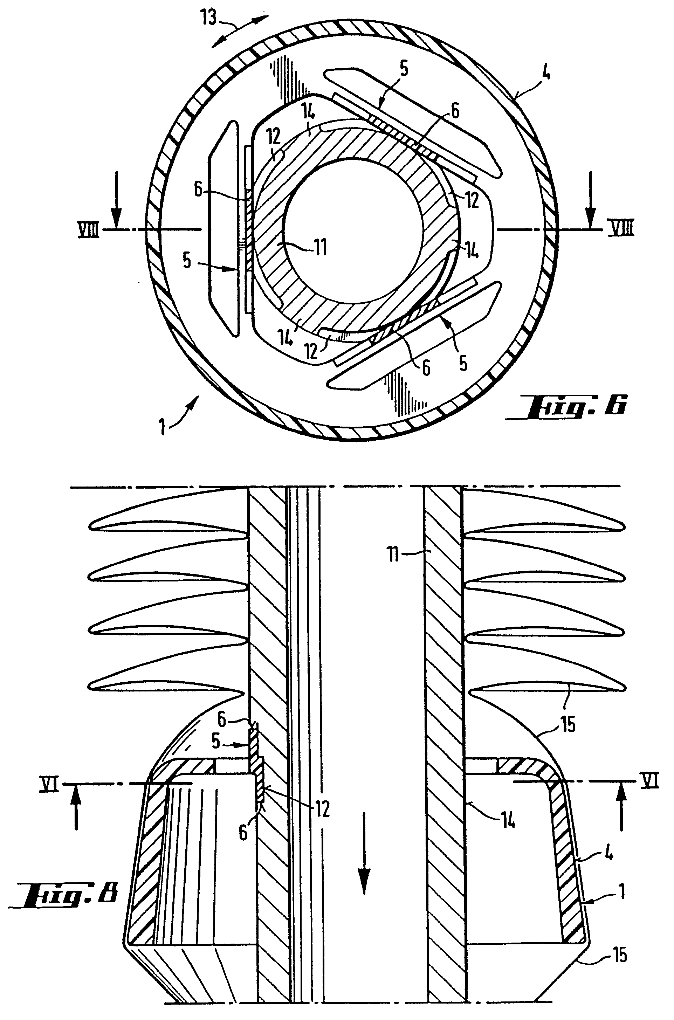

In den Fig. 4 und 5 hat der ringförmige Hohlkörper 1 die gleiche Form wie in Fig. 1, jedoch ist anstelle der stegartigen Elemente ein Sicherungsring 7 (DIN 471/472) vorgesehen, der mit zwei Stegen 8 und an der Basis 9 mit dem inneren Umfang des Hohlkörpers 1 verbunden ist. Er wird an den abgeschrägten Innenkannten 10 in die Nut 12 des Füllrohres 11 (Fig. 6) eingesetzt, wobei die Ausnehmungen 17 des Sicherungsringes 7 für das Überschieben über die Nocken 14 des Füllrohres 11 erforderlich sind.

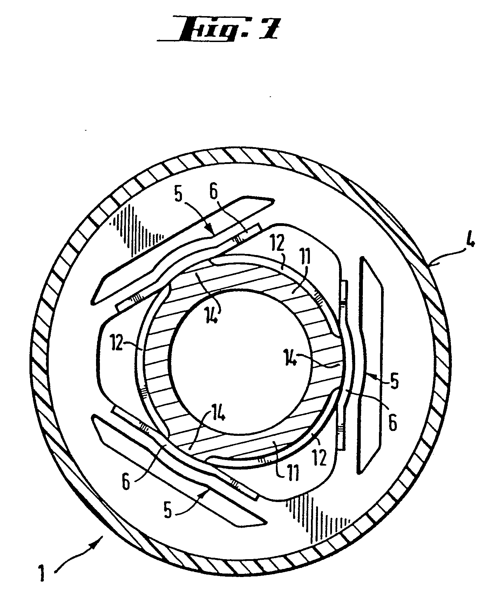

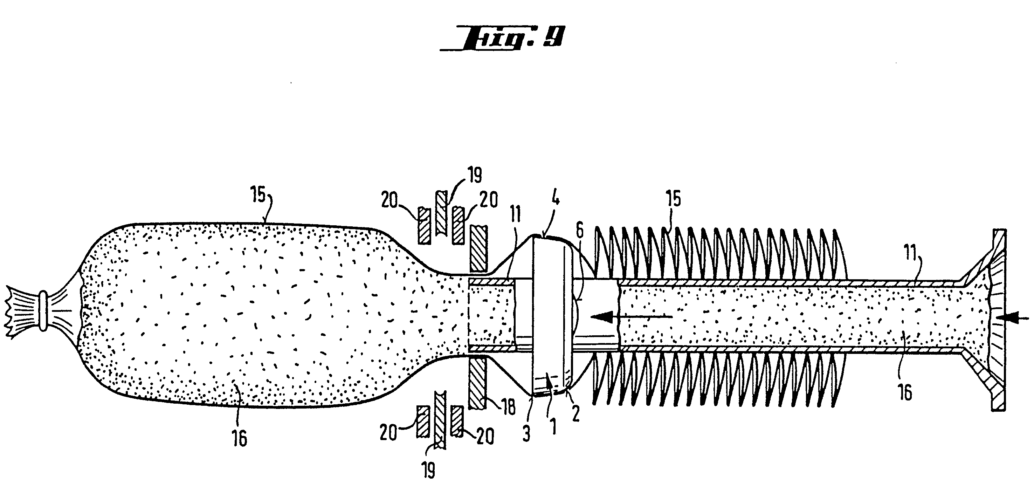

In Fig. 6, 7 und 8 ist der ringförmige Hohlkörper 1 der Fig. 1 auf ein Füllrohr 11 aufgeschoben und mit den stegartigen Elementen 5 in einer Rille oder Nut 12 des Füllrohrs 11 eingerastet. Zum Entfernen vom Füllrohr 11 wird der ringförmige Hohlkörper 1 in Richtung des Pfeiles 13 gedreht bis er in eine Lage kommt wie in Fig. 7 gezeigt, wobei die elastisch federnden stegartigen Elemente 5 auf die Nocken 14 des Füllrohres 11 aufgeschoben werden, so dass der ringförmige Hohlkörper 1 vom Füllrohr 11 abgezogen werden kann. Eine schlauchförmige Hülle 15 befindet sich in gerafftem Zustand auf dem Füllrohr 11 und gleitet über die äussere Oberfläche 4 des ringförmigen Hohlkörpers 1, wobei sie entfältelt und geglättet wird.

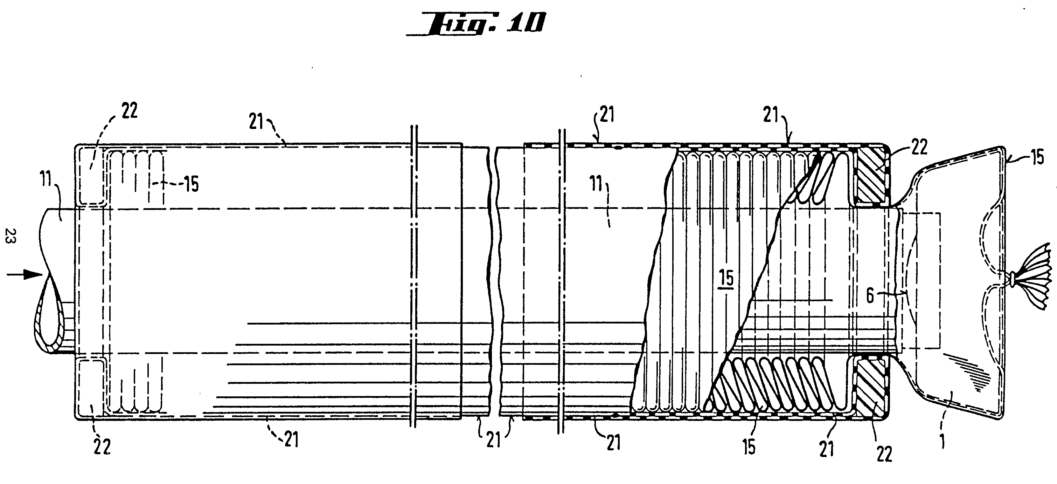

In Fig. 9 ist eine Anordnung in Seitenansicht und Schnitt dargestellt, bei der aus einem Füllrohr 11 eine pastöse Wurstmasse 16 unter Druck in eine schlauchförmige Hülle 15 gefüllt wird. Die Hülle 15 befindet sich in gerafftem Zustand auf dem Füllrohr 11, gleitet über den ringförmigen Hohlkörper 1 in die bremsenden Elemente 18 und durchläuft die schematisch eingezeichnete Schneidstation 19 und Abbindestation 20. Anordnungen dieser Art werden beispielsweise in den US-A Nr. 4017941 und US-A Nr. 4077090 beschrieben.

In Fig. 10 ist eine funktionelle Einheit dargestellt, bestehend aus der gerafften Schlauchhülle 15, deren entraffter Teil über den Hohlkörper 1 gzogen ist und verschlossen ist. Eine Schutzumhüllung 21 umgibt die geraffte Schlauchhülle 15 und umschlingt eine Kreisringscheibe 22. Sie ist zur Mitte der Schlauchhülle umgeschlagen und durch Wärmeverschweissung mit dem Teil der Schutzhülle, welches die geraffte Schlauchhülle 15 umgibt, verbunden. Zum Befüllen mit pastöser Masse wird die funktionelle Einheit mit ihrem offenen Ende auf das Füllrohr der Füllvorrichtung aufgeschoben und der Hohlkörper 1 an der Aussenoberfläche des Füllrohres befestigt.

## Patentansprüche

1. Zum Entfälteln und Glätten einer gerafften Schlauchhülle während des Füllvorgangs geeignete Vorrichtung in Form eines Holkörpers (1) mit im Querschnitt im wesentlichen kreisförmiger äusserer Mantelfläche, dessen Aussendurchmesser sich, beginnend von einem ersten Ende (2) des Hohlkörpers (1), bis zu einem an dessen zweiten Ende (3) gelegenen Maximalwert erweitert und der zum Aufschieben und lösbaren Befestigen auf der äusseren Oberfläche eines Füllrohrs einer Füllvorrichtung eine zentrale Öffnung mit Befestigungselementen aufweist, wobei sich das zweite Ende (3) des Hohlkörpers (1) in der Nähe der Füllrohröffnung befindet, geeignet zur Anordnung im Inneren eines entrafften, einen vorgegebenen Innendurchmesser aufweisenden Abschnitts der gerafften Schlauchhülle (15), dadurch gekennzeichnet, dass der Hohlkörper (1) aus steifem Material besteht und ringartige Form mit einer glatten geschlossenen äusseren Mantelfläche (4) aufweist, dass ferner der Maximalwert für den Aussendurchmesser des Hohlkörpers (1) kleiner ist als der vorgegebene innere Durchmesser der entrafften Schlauchhülle (15) im ungefüllten Zustand.

2. Vorrichtung nach Anspruch 1, dadurch gekennzeichnet, dass die zentrale Öffnung des Hohlkörpers (1) mindestens zwei elastisch federnde stegartige Elemente (5) aufweist, die jeweils in Form einer geradlinig sich erstreckenden Sekante in bezug auf den im wesentlichen kreisförmigen Querschnitt der zentralen Öffnung in symmetrischer Anordnung zum Mittelpunkt des Hohlkörpers (1) und in einer gemeinsamen Ebene senkrecht zur Längsachse des Hohlkörpers angeordnet sind, wobei ihre Form an auf der äusseren Oberfläche des Füllrohrs (11) angebrachte Nocken (14) sowie Nuten und/oder Rillen (12) angepasst ist, mit denen sie einen lösbaren Verschluss bilden können, wobei die elastisch federnden Elemente (5) in beiden Richtungen parallel zur Längsachse vorzugsweise einen gebogenen Verlauf ihres Umfangrandes aufweisen.

3. Vorrichtung nach Anspruch 1, dadurch gekennzeichnet, dass die zentrale Öffnung des Hohlkörpers (1) einen expandierbaren Sicherungsring (7) (DIN 471/472) zur lösbaren Befestigung an den Nocken (14), Nuten und/oder Rillen (12) auf der äusseren Oberfläche des Füllrohrs aufweist.

4. Anordnung zum Befüllen einer gerafften Schlauchhülle (15) mit fliessfähiger Masse wie Wurstmasse (16), die unter Druck aus dem Füllrohr (11) einer Fülleinrichtung ausfliesst, umfassend ein Füllrohr (11), eine geraffte Schlauchhülle (15) mit einem entrafften Teil, angeordnet auf der äusseren Oberfläche des Füllrohrs (11), der einen vorgegebenen inneren Durchmesser aufweist, einen die Schlauchhülle (15) entraffenden und glättenden Hohlkörper (1), angeordnet in dem ungerafften Teil der Schlauchhülle (15) und lösbar befestigt auf der äusseren Oberfläche des Füllrohrs (11), dessen äussere Mantelfläche im wesentlichen kreisförmigen Querschnitt aufweist und dessen Aussendurchmesser sich, beginnend von einem ersten Ende (2) des Hohlkörpers (1), bis zu einem an dessen zweiten Ende (3) gelegenen Maximalwert erweitert, wobei sich das zweite Ende (3) des Hohlkörpers (1) in der Nähe der Füllrohröffnung befindet, der ferner eine zentrale Öffnung zum Aufschieben auf das Füllrohr (11) besitzt, wobei in dieser Öffnung Mittel zum wiederlösbaren Befestigen des Hohlkörpers (1) am Füllrohr (11) vorgesehen sind, eine Bremseinheit (18) mit einer inneren Öffnung, durch die sich der entraffte Teil der Schlauchhülle (15) erstreckt, wobei die Bremseinheit (18) den Schlauchhüllenteil, der sich durch die Bremseinheit erstreckt, einschnürt, eine Abbindeeinheit (20), angeordnet nach dem Füllrohr (11) zum Anbringen eines Verschlusses an die Schlauchhülle (15), nachdem eine bestimmte Länge der Schlauchhülle (15) mit der fliessfähigen Masse (16) gefüllt ist, und eine Schneidestation (19) zum Abtrennen der gefüllten und abgebundenen Schlauchhülle (15), dadurch gekennzeichnet, dass der Hohlkörper (1) aus steifem Material besteht, eine im wesentlichen ringartige Form mit glatter geschlossener äusserer Mantelfläche (4) aufweist, wobei sein maximaler Aussendurchmesser kleiner ist als der vorgegebene innere Durchmesser der entrafften Schlauchhülle im ungefüllten Zustand, wobei die Schlauchhülle beim Füllvorgang mit ihrer Innenwand über die äussere Umfangsfläche des Hohlkörpers in Richtung vom ersten (2) zum zweiten Ende (3) des Hohlkörpers (1) gleitet und hierbei entrafft und geglättet wird.

5. Anordnung nach Anspruch 4, dadurch gekennzeichnet, dass die zentrale Öffnung des Hohlkörpers (1) mindestens zwei elastisch federnde stegartige Elemente (5) aufweist, die jeweils in Form einer geradlinig sich erstreckenden Sekante in bezug auf den im wesentlichen kreisförmigen Querschnitt der zentralen Öffnung in symetrischer Anordnung zum Mittelpunkt des Hohlkörpers (1) und in einer gemeinsamen Ebene senkrecht zur Längsachse des Hohlkörpers (1) angeordnet sind, wobei ihre Form den auf der äusseren Oberfläche des Füllrohrs (11) angebrachten Nocken (14) sowie Nuten und/oder Rillen (12) angepasst ist, mit denen sie einen lösbaren Verschluss bilden, wobei vorzugsweise die elastisch federnden Elemente (5) in beiden Richtungen parallel zur Längsachse einen gebogenen Verlauf ihres Umfangrandes aufweisen.

6. Anordnung nach Anspruch 4, dadurch gekennzeichnet, dass der Hohlkörper (1) in seinem Hohlraum einen Sicherungsring (7) aufweist, mit dem er an der äusseren Oberfläche des Füllrohrs (11) fixiert ist.

7. Vorverpackte, funktionelle Einheit, bestehend aus einer gerafften Schlauchhülle (15) zur Verpackung von Nahrungsmitteln und einer an einem entrafften Ende der Schlauchhülle (15), welches einen vorgegebenen Innendurchmesser aufweist, darin eingeschlossenen Vorrichtung zum Entfälteln und Glätten der Hülle (15) während des Füllvorgangs in Form eines Hohlkörpers (1) mit im Querschnitt im wesentlichen kreisförmiger äusserer Mantelfläche, dessen Aussendurchmesser sich, beginnend von einem ersten Ende (2) des Hohlkörpers (1), bis zu einem an dessen zweiten Ende (3), in Richtung zum entrafften Ende der Schlauchhülle (15), gelegenen Maximalwert erweitert, und der zum Aufschieben und lösbaren Befestigen auf der äusseren Oberfläche eines Füllrohres einer Füllvorrichtung eine zentrale Öffnung mit Befestigungselementen aufweist, wobei die schlauchförmige Hülle an ihrem entrafften Ende, das über den Hohlkörper hinausragt, verschlossen ist und auf ihrer Aussenseite mit einer Schutzumhüllung (21) umgeben ist, dadurch gekennzeichnet, dass der Hohlkörper (1) aus steifem Material besteht und ringartige Form mit einer glatten, geschlossenen äusseren Mantelfläche (4) aufweist, dass ferner der Maximalwert des Aussendurchmessers des Hohlkörpers (1) kleiner ist als der vorgegebene innere Durchmesser der entrafften Schlauchhülle (15) im ungefüllten Zustand.

8. Funktionelle Einheit nach Anspruch 7, dadurch gekennzeichnet, dass der innere Umfang des Hohlkörpers (1) mindestens zwei elastisch federnde stegartige Elemente (5) aufweist, die jeweils in Form einer geradlinig sich erstreckenden Sekante in bezug auf den im wesentlichen kreisförmigen Querschnitt der zentralen Öffnung in symmetrischer Anordnung zum Mitelpunkt des Hohlkörpers (1) und in einer gemeinsamen Ebene senkrecht zur Längsachse des Hohlkörpers (1) angeordnet sind, wobei ihre Form den auf der äusseren Oberfläche des Füllrohrs (11) angebrachten Nocken (14), Nuten und/oder Rillen (12) angepasst ist, mit denen sie einen lösbaren Verschluss bilden, wobei vorzugsweise die elastisch federnden Elemente (5) in beiden Richtungen parallel zur Längsachse einen gebogenen Verlauf ihres Umfangrandes aufweisen.

9. Funktionelle Einheit nach Anspruch 7, dadurch gekennzeichnet, dass der Hohlkörper (1) zur Befestigung am Füllrohr (11) in seinem Hohlraum einen Sicherungsring (7) (DIN 471/472) zur Befestigung an Nocken, Nuten und/oder Rillen des Füllrohrs aufweist.

10. Funktionelle Einheit nach einem der Ansprüche 7 bis 9, dadurch gekennzeichnet, dass die Schutzumhüllung (21) den entrafften Teil der Schlauchhülle, der sich über den Hohlkörper (1) erstreckt, freilässt, wobei vorzugsweise die Schutzumhüllung (21) sich durch die zentrale Ringöffnung von Kreisringscheiben (22) erstreckt, die an beiden Enden des gerafften Teils der Schlauchhülle (15) vorhanden sind, und über die äussere Oberfläche der Kreisringscheiben (22) in Richtung zur Mitte der Schlauchhülle (15) zurückgestülpt ist, wobei insbesondere der zurückgestülpte Teil der Schutzumhüllung (21) mit dem an der gerafften Schlauchhülle (15) anliegenden Teil der Schutzumhüllung (21) durch Wärmeschweissung verbunden ist.


## Revendications

1. Dispositif pour déplisser et lisser pendant le remplissage, une gaine tubulaire plissée, ce dispositif ayant la forme d'un corps creux (1) dont la surface externe est de section sensiblement circulaire, dont le diamètre externe augmente, en partant d'une première extrémité (2) du corps creux (1), jusqu'à une valeur maximale située à sa deuxième extrémité (3) et qui, pour être placé et fixé de façon amovible sur la surface externe d'un tube de remplissage d'un dispositif de remplissage, présente une ouverture centrale pourvue d'éléments de fixation, la deuxième extrémité (3) du corps creux (1) se trouvant près de l'orfice du tube de remplissage, convenant pour la mise en place à l'intérieur d'une portion déplissée, présentant un diamètre interne donné, de la gaine tubulaire plissée (15), caractérisé en ce que le corps creux (1) est fait d'une matière rigide et en ce que sa forme est sensiblement annulaire, avec une surface externe (4) lisse fermée et, en outre, en ce que le diamètre externe maximal du corps creux (1) est inférieur au diamètre interne donné de la gaine tubulaire (15) déplissée à l'état non remplie.

2. Dispositif selon la revendication 1, caractérisé en ce que l'ouverture centrale du corps creux (1) présente au moins deux organes (5) élastiques analogues à des barrettes, qui sont disposés chacun sous la forme d'une sécante qui s'étend de façon rectiligne par rapport à la section sensiblement circulaire de l'ouverture centrale, symétriquement par rapport au centre du corps creux (1) et dans un plan commun perpendiculaire à l'axe longitudinal du corps creux (1), leur forme étant adaptée à des saillies (14) qui se trouvent sur la surface externe du tube de remplissage (11) ainsi qu'à des encoches et/ou à des rainures (12), avec lesquelles ils peuvent constituer une fermeture amovible, les organes élastiques (5) présentant de préférence dans les deux sens, parallèlement à l'axe longitudinal, un bord périphérique d'allure courbe.

3. Dispositif selon la revendication 1, caractérisé en ce que l'ouverture centrale du corps creux (1) présente un circlip expansible (7) (DIN 471/472) pour sa fixation amovible sur les saillies (14), les encoches ou les rainures (12), ou les unes et les autres, de la surface externe du tube de remplissage.

4. Appareil de remplissage d'une gaine tubulaire plissée (15) avec une masse pouvant s'écouler, comme de la chair à saucisse (16), qui s'écoule sous pression en sortant du tube de remplissage (11) d'un dispositif de remplissage, comprenant un tube de remplissage (11), une gaine tubulaire plissée (15) présentant une partie déplissée, disposée sur la surface externe du tube de remplissage (11) et présentant un diamètre interne donné, un corps creux (1) qui déplisse et lisse la gaine tubulaire (15), disposé dans la partie non plissée de la gaine tubulaire (15) et fixé de façon amovible sur la surface externe du tube de remplissage (11), dont la surface externe présente une section sensiblement circulaire et dont le diamètre externe augmente en partant d'une première extrémité (2) du corps creux (1), jusqu'à une valeur maximale située à sa deuxième extrémité (3), la deuxième extrémité (3) du corps creux (1) se trouvant près de l'orifice du tube de remplissage, ce corps creux possédant en outre une ouverture centrale pour être placé sur le tube de remplissage (11), des moyens de fixation amovibles du corps creux (1) sur le tube de remplissage se trouvant dans cette ouverture, une unité de freinage (18) ayant une ouverture interne dans laquelle passe la partie déplissée de la gaine tubulaire (15), l'unité de freinage (18) étranglant la partie de la gaine tubulaire qui passe dans l'unité de freinage, une unité de liage (20) disposée après le tube de remplissage (11) pour placer une fermeture sur la gaine tubulaire (15), quand une certaine longueur de la gaine tubulaire (15) est remplie avec la masse (16) pouvant s'écouler, et un poste de coupe (19) servant à sectionner la gaine tubulaire (15) remplie et liée, caractérisé en ce que le corps creux (1) est constitué d'une matière rigide, en ce qu'il présente une forme sensiblement annulaire, avec une surface externe (4) lisse fermée, le diamètre externe maximal de ce corps creux (1) étant inférieur au diamètre interne donné de la gaine tubulaire déplissée et non remplie, la gaine tubulaire glissant, lors du remplissage, par sa paroi interne sur la surface externe du corps creux, dans le sens allant de la permière (2) à la deuxième (3) extrémité du corps creux (1), et étant ainsi déplissée et lissée.

5. Dispositif selon la revendication 4, caractérisé en ce que l'ouverture centrale du corps creux (1) présente au moins deux organes (5) élastiques analogues à des barrettes qui sont disposés chacun sous la forme d'une sécante qui s'étend de façon rectiligne, par rapport à la section sensiblement circulaire de l'ouverture centrale, symétriquement par rapport au centre du corps creux (1) et dans un plan commun perpendiculaire à l'axe longitudinal du corps creux (1), leur forme étant adaptée aux saillies (14) qui se trouvent sur la surface externe du tube de remplissage (11), ainsi qu'à des encoches et/ou à des rainures (12), avec lesquelles ils forment une fermeture amovible, les organes (5) élastiques présentant de préférence dans les deux sens, parallèlement à l'axe longitudinal, un bord périphérique d'allure courbe.

6. Dispositif selon la revendication 4, caractérisé en ce que le corps creux (1) présente, dans son espace creux, un circlip (7) au moyen duquel il est fixé à la surface externe du tube de remplissage (11).

7. Unité fonctionnelle conditionnée d'avance constituée d'une gaine tubulaire plissée (15) destinée à emballer des produits alimentaires et d'un dispositif enfermé dans la gaine tubulaire (15) à une extrémité déplissée de cette gaine, extrémité qui présente un diamètre interne donné, ce dispositif servant à déplisser et à lisser la gaine (15) pendant le remplissage et se présentant sous la forme d'un corps creux (1), dont la surface externe, vue en coupe, est sensiblement circulaire et dont le diamètre externe, en partant d'une première extrémité (2) du corps creux (1), augmente dans la direction de l'extrémité déplissée de la gaine tubulaire (15), jusqu'à une valeur maximale située à sa deuxième extrémité (3), et qui présente, pour sa mise en place et sa fixation amovible sur la surface externe d'un tube de remplissage d'un dispositif de remplissage, une ouverture centrale ayant des éléments de fixation, la gaine tubulaire étant fermée à son extrémité déplissée qui dépasse du corps creux et étant entourée extérieurement d'une enveloppe protectrice (21), caractérisée en ce que le corps creux (1) est constitué d'une matière rigide et en ce qu'il présente une forme annulaire avec une surface externe (4) fermée et lisse et, en outre, en ce que la valeur maximale du diamètre externe du corps creux (1) est inférieur au diamètre interne donné de la gaine tubulaire (15) déplissée et non remplie.

8. Unité fonctionnelle selon la revendication 7, caractérisée en ce que la périphérie intérieure du corps creux (1) présente au moins deux organes élastiques analogues à des barrettes (5), qui, ayant chacun la forme d'une sécante s'étendant de façon rectiligne par rapport à la section sensiblement circulaire de l'ouverture centrale, sont disposés symétriquement par rapport au centre du corps creux (1) et dans un plan commun perpendiculaire à l'axe longitudinal du corps creux (1), leur forme étant adaptée aux saillies (14), encoches ou rainures (12), ou aux unes et aux autres, qui se trouvent sur la surface externe du tube de remplissage (11) et avec lesquelles ils forment une fermeture amovible, les organes élastiques (5) présentant de préférence dans les deux sens, parallèlement à l'axe longitudinal, un bord périphérique d'allure courbe.

9. Unité fonctionnelle selon la revendication 7, caractérisée en ce que le corps creux (1) présente, dans son espace creux, un circlip (7) (DIN 471/472) pour sa fixation sur des saillies, des encoches ou des rainures, ou les unes et les autres, du tube de remplissage.

10. Unité fonctionnelle selon l'une des revendications 7 à 9, caractérisée en ce que l'enveloppe protectrice (21) laisse libre la partie déplissée de la gaine tubulaire qui s'étend sur le corps creux (1), l'enveloppe protectrice (21) passant de préférence par l'ouverture annulaire centrale de disques annulaires circulaires (22) qui se trouvent aux deux extrémités de la partie plissée de la gaine tubulaire (15) et étant retroussée par-dessus la surface externe des disques annulaires circulaires (22), en direction du milieu de la gaine tubulaire (15), la partie retroussée de l'enveloppe protectrice (21) étant fixée par soudage à chaud à la partie de l'enveloppe protectrice (21) qui est adjacente à la gaine tubulaire (15) plissée.

**Claims**

1. Device suitable for deshirring and smoothing a shirred tubular casing during the stuffing process, in the form of a hollow body which has an external circumferential surface of an essentially circular cross-section and an external diameter increasing from a first end (2) of the hollow body (1) to a maximum value at the second end (3) of the hollow body (1), and which possesses a central aperture with mounting elements for pushing the hollow body (1) onto and releasably fastening it to the external surface of a stuffing horn of a stuffing apparatus, whereby the second end (3) of the hollow body (1) is close to the stuffing horn aperture, said device being suitable for being arranged in the interior of a deshirred portion of the shirred tubular casing (15) of a predetermined internal diameter, characterized in that the hollow body (1) is made of a rigid material and has an annular shape with a smooth, closed external circumferential surface (4), and that further the maximum value for the external diameter of the hollow body (1) is smaller than the predetermined internal diameter of the deshirred tubular casing (15) in the unstuffed state.

2. Device as claimed in claim 1, characterized in that the central aperture of the hollow body (1) comprises at least two web-like, resilient elements (5) which are each arranged in the form of a straight-line secant relative to the essentially circular cross-section of the central aperture and in symmetrical alignment in respect of the center point of the hollow body (1), in a common plane extending perpendicularly to the longitudinal axis of the hollow body (1), the shape of these web-like elements (5) being adapted to protrusions (14) and recesses and/or grooves (12) provided on the external surface of the stuffing horn (11), so that the elements (5) and the stuffing horn (11) can be releasably connected, the circumferential edges of the resilient elements (5) preferably being curved in both directions parallel to the longitudinal axis.

3. Device as claimed in claim 1, characterized in that the central aperture of the hollow body (1) includes an expandable securing ring (7) (DIN 471/472) for releasably engaging the protrusions (14), grooves and/or recesses (12) provided on the external surface of the stuffing horn.

4. Apparatus for stuffing a shirred tubular casing (15) with a fluid composition, such as sausage meat (16) flowing under pressure through the stuffing horn (11) of a stuffing installation, comprising a stuffing horn (11); a shirred tubular casing (15) with a deshirred portion arranged on the external surface of the stuffing horn (11) and having a predetermined internal diameter; a hollow body (1), by which the tubular casing (15) is deshirred and smoothed and which is installed in the deshirred portion of the tubular casing (15) and releasably fastened to the external surface of the stuffing horn (11), the external circumferential surface of said hollow body (1) having an essentially circular cross-section and an external diameter increasing from a first end (2) of the hollow body (1) to a maximum value at the second end (3) of the hollow body (1), whereby the second end (3) of the hollow body (1) is close to the stuffing horn aperture and the hollow body (1) processes a central aperture for being pushed onto the stuffing horn, means for releasably attaching the hollow body (1) to the stuffing horn being provided in this aperture; a bracke unit (18) with an internal aperture, through which the deshirred portion of the tubular casing (15) extends, the brake unit (18) contracting the deshirred portion of the tubular casing (15) extending therethrough; a tying station (20) arranged downstream the stuffing horn (11) for applying a closure to the tubular casing (15) after a desired length of the tubular casing (15) is stuffed with the fluid composition (16), and a cutting station (19) for cutting off the stuffed and closed tubular casing (15), said apparatus being characterized in that the hollow body (1) is made of a rigid material and has an essentially circular form with a smooth, closed external circumferential surface (4), whereby the maximum value for the external diameter of the hollow body (1) is smaller than the predetermined internal diameter of the deshirred tubular casing (15) in the unstuffed state, and whereby during stuffing the internal surface of the tubular casing slides over the external surface of the hollow body (1), the direction of movement being from the first end (2) to the second end (3) of the hollow body (1), whereby the tubular is deshirred and smoothed.

5. Apparatus as claimed in claim 4, characterized in that the central aperture of the hollow body (1) includes at least two resilient web-like elements (5) which are each arranged in the form of a straight-line secant relative to the essentially circular cross-section of the central aperture and in symmetrical alignment in respect of the center point of the hollow body (1), in a common plane extending perpendicularly to the longitudinal axis of the hollow body (1), the shape of these web-like elements (5) being adapted to protrusions (14) and recesses and/or grooves (12) provided on the external surface of the stuffing horn (11), so that the elements (5) and the stuffing horn (11) can be releasably connected, the circumferential edges of the resilient elements (5) preferably being curved in both directions parallel to the longitudinal axis.

6. Apparatus as claimed in claim 4, characterized in that the hollow body (1) includes a securing ring (7) in its cavity, by means of which it is fastened to the external of the stuffing horn (11).

7. Preassembled functional unit, comprising a shirred tubular casing (15) for packaging foodstuffs and a device, in the form of a hollow body (1), for deshirring and smoothing the casing (15), whereby said hollow body (1) is enclosed in a deshirred end of the tubular casing (15) having a predetermined internal diameter and has an essentially circular external circumferential surface and an external diameter increasing, in the direction of the deshirred end of the tubular casing, from a first end (2) of the hollow body (1) to a maximum value at the second end (3) of the hollow body (1), and possesses a central aperture with mounting elements for pushing the hollow body (1) onto and releasably attaching it to the external surface of a stuffing horn of a stuffing device, whereby the deshirred end of the tubular casing (15), which protrudes from the hollow body (1), is closed and the external surface of the tubular casing (15) is surrounded by a protective covering (21), said preassembled unit being characterized in that the hollow body (1) is made of a rigid material and has an annular shape with a smooth closed external circumferential surface (4) and that further the maximum value for the external diameter of the follow body (1) is smaller than the predetermined internal diameter of the deshirred tubular casing (15) in the unstuffed state.

8. Functional unit as claimed in claim 7, characterized in that the internal circumferential surface of the hollow body (1) comprises at least two resilient, web-like elements (5) which are each arranged in the form of a straight-line secant relative to the essentially circular cross-section of the central aperture and in symmetrical alignment in respect of the center point of the hollow body (1), in a common plane extending perpendicularly to the longitudinal axis of the hollow body (1), the shape of these web-like elements (5) being adapted to protrusions (14) and recesses and/or grooves (12) provided on the external surface of the stuffing horn (11), so that the elements (5) and the stuffing horn (11) are releasably connected, the circumferential edges of the resilient elements (5) preferably being curved in both directions parallel to the longitudinal axis.

9. Fonctional unit as claimed in claim 7, characterized in that, for the attachment to the stuffing horn (11), the hollow body (1) contains a securing ring (7) (DIN 471/472) in its cavity, for engaging protrusions, recesses and/or grooves provided on the stuffing horn.

10. Functional unit as claimed in any of claims 7 to 9, characterized in that the protective covering (21) leaves free the deshirred portion of the tubular casing which extends over the hollow body (1), whereby the protective covering (21) preferably extends through the central circular aperture of annular discs (22) located at the two ends of the shirred portion of the tubular casing (15) and is turned back over the external surface of the annular discs (22), in the direction of the center of the tubular casing (15), whereby the turned-back portion of the protective covering (21) is in particular joined by heat-sealing to the portion of the protective covering which is in contact with the shirred tubular casing (15).

*Fig. 3*

*Fig. 2*

*Fig. 1*

# Fig. 3A

**Fig. 4**

**Fig. 5**

_Fig: 6_

_Fig: 8_

## Fig. 7

# Fig. 9

0 046 560

0 046 560

Fig. 10